# EUROPÄISCHE PATENTSCHRIFT

(11) **EP 1 879 742 B1**
(45) Veröffentlichungstag und Bekanntmachung des Hinweises auf die Patenterteilung: **25.04.2012**
(21) Anmeldenummer: 06742831.8
(22) Anmeldetag: 08.05.2006
(51) Int. Cl.: B32B 21/08

(54) **MEHRSCHICHTPLATTE**
MULTILAYERED BOARD
PANNEAU MULTICOUCHE

(30) Priorität: 09.05.2005 DE 102005021156
(43) Veröffentlichungstag der Anmeldung: 23.01.2008
(73) Patentinhaber: Interglarion Limited, 2404 Engomi, Nikosia (CY)
(72) Erfinder: RUHDORFER, Herbert, A-5020 Salzburg (AT)
(74) Vertreter: Herzog, Markus
(86) Internationale Anmeldenummer: PCT/EP2006/004287
(87) Internationale Veröffentlichungsnummer: WO 2006/119950

(56) Entgegenhaltungen:
- WO-A-00/41883
- WO-A-00/61385
- WO-A-2006/000253
- US-A- 4 552 792
- US-A- 5 702 806

## Beschreibung

Die Erfindung betrifft eine Mehrschichtplatte, umfassend eine Werkstoffplatte, welche an ihrer Sichtfläche mit wenigstens einer mit Harz getränkten Papierlage beschichtet ist, wobei
auf der von der Werkstoffplatte (20) abgewandten Seite der wenigstens einen Papierlage (10) bzw. der obersten Papierlage (10) eine Harzschicht (18) vorhanden ist, deren mittlere Schichtdicke (d) wenigstens 5 µm beträgt und
die wenigstens eine Papierlage (10) eine Sichtpapierlage (10), vorzugsweise eine Dekorpapierlage (10), umfasst.

Es ist bekannt, Holzwerkstoffe wie Spanplatten, Faserplatten, beispielsweise MDF-Platten (medium density fibreboard) oder HDF-Platten (high density fibreboard), oder OSB-Platten (oriented structural board) mit dekorativen Papieren zu beschichten, welche vorzugsweise mit Aminoplastharzen getränkt sind. Weiterhin ist es bekannt, Schichtpressstoffe (continuous pressure laminate - CPL), welche durch Aufeinanderlegen von mehreren Papierlagen gebildet sind, mit dekorativen Papieren zu beschichten, die vorzugsweise mit Aminoplastharzen getränkt sind. Die hierfür verwendeten dekorativen Papiere haben in der Regel ein Flächengewicht von 45 bis 140 g/m². Üblicherweise sind die für die Tränkung der Papierbahnen verwendeten Harze Polykondensationsprodukte aus Melamin mit Formaldehyd. Es kommen allerdings auch Polykondensationsprodukte zum Einsatz, welche eine Mischpolykondensation von Harnstoff oder/und Melamin mit Formaldehyd aufweisen.

Bei der Herstellung des mit Harz imprägnierten Papiers werden die Rohpapiere in speziellen Imprägnieranlagen mit den oben genannten Harzen imprägniert. Anschließend werden derart imprägnierte und auf Größe zugeschnittene, dekorative Papiere einseitig oder beidseitig auf Werkstoffplatten aufgelegt und in Mehretagenpressen, Kurztaktpressen oder kontinuierlich arbeitenden Pressen (Durchlaufpressen) zu einem dekorativen Produkt verpresst, welches dann beispielsweise als dekorative Platte, Arbeitsplatte oder Fußbodenelement in den Handel kommt.

Zur Erzielung einer gewünschten Oberflächenstruktur der dekorativen Produkte bzw. der dekorativen Papiere werden in den Pressen meist verchromte Pressbleche eingesetzt, welche mit entsprechenden Oberflächenstrukturen ausgebildet sind. Dabei wird unter einer "Struktur" nicht nur Reliefstrukturen, wie Holzstruktur oder Steinstruktur, verstanden, sondern auch Glanzstrukturen, wie Hochglanz, Perlglanz oder Mattglanz.

Eine optisch hochglänzende Oberfläche ist dabei entsprechend den Normen DIN 67530, ISO 2813, ASTM D 523 und BS 3900 Part D5 so definiert, dass sie bei einem Einfallswinkel von 20° gegenüber der Flächenebene einen Wert von mehr als 60 Glanzeinheiten aufweist. Oberflächen, die bei einem Einfallswinkel von 60° gegenüber der Flächenebene einen Wert von 10 bis 70 Glanzeinheiten aufweisen, werden als mittelglänzende Oberflächen bezeichnet, während mattglänzende Oberflächen bei einem Einfallswinkel von 60° weniger als 10 Glanzeinheiten aufweisen.

Während optisch mattglänzende Oberflächen mit allen oben genannten Pressentypen erhalten werden können, ist bisher die Herstellung von optisch hochglänzenden Oberflächen nur in Mehretagenpressen mit anschließender Rückkühlung möglich.

Der Einsatz von Mehretagenpressen zur Herstellung von Mehrschichtplatten mit hochglänzenden Oberflächen hat jedoch durch die erforderliche Rückkühlphase die Nachteile eines großen Energieverbrauchs und hoher Herstellungsdauer, da der gesamte Presszyklus 15 bis 25 Minuten beträgt. Bei einem Kurztakt-Pressverfahren beträgt der Presszyklus dagegen nur 10 bis 30 s, und im kontinuierlichen Herstellungsverfahren dauert ein Presszyklus sogar nur 5 bis 10 s.

Daher ist es die Aufgabe der vorliegenden Erfindung, eine Mehrschichtplatte bereitzustellen, die auch auf Kurztaktanlagen und in kontinuierlich arbeitenden Anlagen mit einer hochglänzenden Oberfläche hergestellt werden kann.

Zur Lösung dieser Aufgabe stellt die Erfindung eine gattungsgemäße Mehrschichtplatte bereit, bei der die bei der Herstellung der Mehrschichtplatte verwendete Sichtpapierlage (10) eine nach Bekk gemessene Rohpapierglätte von mindestens 20 s, vorzugsweise mindestens 25 s, aufweist.

Durch die anspruchsgemäße Harzschicht können auch im Kurztaktverfahren und auf Durchlaufpressen hochglänzende Oberflächen gemäß der obigen Definition hergestellt werden, da die mittlere Schichtdicke von wenigstens 5 µm verhindert, dass Papierfasern bis an die Oberfläche des dekorativen Papiers hervorstehen und somit die Reflektionseigenschaften der Oberfläche verschlechtern und durch die Rohpapierglätte erreicht werden kann, dass die aufgetragene Harzmenge deutlich weniger in das Papier absackt als bei nicht so glatten Papieren, wodurch die erfindungsgemäße Harzschicht mit einer relativ geringen Harzmenge erreicht werden kann.

Vorzugsweise ist hierbei die Harzschicht eine im Wesentlichen durchgehend ausgebildete Schicht, deren Schichtdicke an jeder Stelle wenigstens 2 µm, vorzugsweise wenigstens 3 µm, beträgt. Hierdurch ist sichergestellt, dass die Harzschicht an keiner Stelle so dünn wird, dass trotz der mittleren Schichtdicke von wenigstens 5 µm lokal noch einzelne Papierfasern bis an die Oberfläche der Papierlage ragen können.

Die Schichtdicke kann beispielsweise höchstens 100 µm, vorzugsweise höchstens 50 µm, noch bevorzugter höchstens 20 µm, betragen, da durch noch größere Schichtdicken nur ein erhöhter Harzverbrauch einhergeht, aber keine weitere Verbesserung der Oberflächeneigenschaften, insbesondere des Oberflächenglanzes, erzielt wird.

Die Sichtpapierlage kann beispielsweise ein Flächengewicht von zwischen etwa 45 g/m² und etwa 140 g/m² aufweisen.

Weiterhin kann zwischen der Werkstoffplatte und der Sichtpapierlage wenigstens eine Unterlegpapierlage angeordnet sein, die als weitere Barriere gegen das Absacken von Harz dient. Alternativ oder zusätzlich kann auf der von der Werkstoffplatte abgewandten Seite der Sichtpapierlage eine Overlaypapierlage vorgesehen sein, die hauptsächlich zur Erhöhung der Verschleißfestigkeit der Mehrschichtplatte dient. Diese Overlaypapierlage weist vorzugsweise ein Flächengewicht von zwischen etwa 10 g/m² und etwa 80 g/m² auf. Durch das Imprägnieren mit Harz wird die Overlaypapierlage im Wesentlichen transparent, so dass sie die Sicht auf die vorzugsweise als Dekorpapierlage ausgebildete Sichtpapierlage praktisch nicht behindert.

Das verwendete Harz ist vorzugsweise ein Polykondensationsprodukt aus Melamin oder/und Harnstoff mit Formaldehyd.

Die Werkstoffplatte ist vorzugsweise eine Holzwerkstoffplatte, beispielsweise eine Spanplatte oder eine Faserplatte, vorzugsweise eine MDF-Platte oder eine HDF-Platte, oder eine OSB-Platte. Alternativ kann die Werkstoffplatte eine durch Aufeinanderlegen von mehreren Papierlagen gebildete Schichtpressstoffplatte (CPL-Platte) sein.

Weitere Eigenschaften, Merkmale und Vorteile der vorliegenden Erfindung werden aus der folgenden detaillierten Beschreibung zusammen mit den beigefügten Zeichnungen ersichtlich, die rein exemplarisch eine Ausführungsform der Erfindung näher erläutern. Es zeigt:
- Fig. 1: eine grob schematische Schnittdarstellung zur Erläuterung des grundlegenden Aufbaus einer erfindungsgemäßen Mehrschicht- platte;
- Fig. 2: eine schematische Darstellung eines Querschnitts durch den Oberflächenbereich einer mit Harz imprägnierten Sichtpapierlage für eine herkömmliche Mehrschichtplatte ohne Overlaypapierlage; und
- Fig. 3: eine schematische Darstellung des Querschnitts durch den Oberflächenbereich einer Sichtpapierlage für eine erfindungsgemäße Mehrschichtplatte ohne Overlaypapierlage.

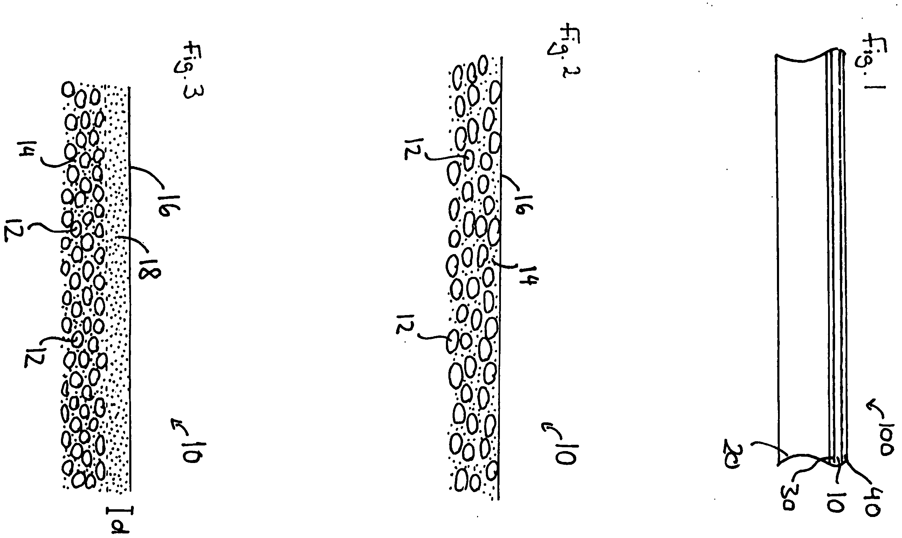

In Fig. 1 ist schematisch der Aufbau einer Mehrschichtplatte 100 gezeigt. Hierbei ist eine Werkstoffplatte 20, die entweder eine Holzwerkstoffplatte, beispielsweise eine Spanplatte oder eine Faserplatte, vorzugsweise eine MDF-Platte oder eine HDF-Platte, oder eine OSB-Platte, oder eine durch Aufeinanderlegen von mehreren Papierlagen gebildete Schichtpressstoffplatte umfasst, mit einer mit Harz getränkten Sichtpapierlage 10 beschichtet.

Zusätzlich kann zwischen der Werkstoffplatte 20 und der Sichtpapierlage 10 eine Unterlegpapierlage 30 angeordnet sein, die ein Absacken des Harzes aus der Sichtpapierlage 10 verhindert. Ferner kann zur Erhöhung der Verschleißfestigkeit der Mehrschichtplatte 100 an der von der Werkstoffplatte 20 abgewandten Seite der Sichtpapierlage 10 eine Overlaypapierlage 40 vorgesehen sein. Die Overlaypapierlage 40 kann ein relativ geringes Flächengewicht von zwischen 10 und 80 g/m² aufweisen und ist daher, wenn sie mit Harz getränkt ist, im Wesentlichen transparent. Dieser grundlegende Aufbau der erfindungsgemäßen Mehrschichtplatte 100 entspricht jenem einer herkömmlichen Mehrschichtplatte.

In Fig. 2 ist eine herkömmliche mit Harz getränkte Sichtpapierlage 10 dargestellt, mit der bei einer in Fig. 1 gezeigten Struktur (ohne Overlaypapierlage 40) eine Werkstoffplatte 20 beschichtet wird, und die eine Mischung aus Papierfasern 12 und die Papierfasern 12 umgebendem Tränkharz 14 umfasst. Hierbei ist zu erkennen, dass einige Papierfasern 12 bis an die Sichtoberfläche 16 der Papierlage 10 reichen, so dass diese vorstehenden Papierfasern 12 Oberflächenrauhigkeiten auf der Sichtoberfläche 16 der Papierlage bilden können, die einfallendes Licht streuen und somit die Glanzeigenschaften der Sichtoberfläche 16 verschlechtern.

Die in Fig. 3 dargestellte erfindungsgemäße Sichtpapierlage 10 weist im Unterschied dazu eine oberhalb der Papierfasern 12 überstehende Harzschicht 18 auf, die idealerweise eine gleichmäßige Dicke d von wenigstens 5 µm aufweist. Durch diese oberhalb der Papierfasern 12 überstehende Harzschicht 18 wird verhindert, dass einzelne Papierfasern 12 bis zur Sichtoberfläche 16 der mit Harz getränkten Papierlage 10 vorstehen, so dass bei dieser mit Harz getränkten Papierlage 10 eine glatte, gut reflektierende und somit hochglänzende Sichtoberfläche 16 bereitgestellt werden kann.

Um eine derartige überstehende Harzschicht 18 zu erreichen, kann entweder ausreichend Harz, in Abhängigkeit des Flächengewichts des verwendeten Papiers und der Betriebsparameter der verwendeten Presse, aufgetragen werden, oder es kann sichergestellt werden, dass das aufgetragene Harz möglichst wenig in das Papier 10 oder sogar weiter in die darunter liegende Werkstoffplatte 20 absackt, indem entweder durch Erhöhen der Rohpapierglätte die Papierfasern 12 nahe der Sichtoberfläche 16 verdichtet werden, oder indem zwischen der Werkstoffplatte 20 und der Dekorpapierlage 10 wenigstens eine Unterlegpapierlage 30 verwendet wird, die verhindert, dass das Harz in die Werkstoffplatte 20 absackt.

Im Folgenden werden mehrere Beispiele für die Erhöhung der Glanzeigenschaften von Dekorpapieroberflächen 16 für erfindungsgemäße Mehrschichtplatten 100 gegeben:

### Beispiel 1: Erhöhung der Rohpapierglätte

Bei einem Dekorpapier mit Weiß-Dekor wurde die Rohpapierglätte, gemessen nach Bekk, von 17 s auf 28 s erhöht. Ein derart behandeltes Dekorpapier und ein Dekorpapier, bei dem keine zusätzliche Glättung durchgeführt wurde, wurden mit derselben Harzflotte imprägniert, wobei jeweils bezogen auf den- Quadratmeter die gleiche Melaminharzmenge aufgetragen wurde. Da durch die Erhöhung der Papieroberflächenglätte das Harz deutlich weniger in das Papier absackt, kommt es bei der anschließenden Kurztakt-Hochglanzverpressung der beiden unterschiedlich präparierten Dekorpapiere zu einer deutlichen Verbesserung des Glanzgrades für das Dekorpapier mit der auf 28 s erhöhten Rohpapierglätte, wobei bei einem Einfallswinkel von 20° zur Papieroberfläche das Dekorpapier, bei dem keine zusätzliche Glättung durchgeführt wurde, einen Wert von 28 Glanzeinheiten (GE) aufweist, und das Dekorpapier, bei dem die zusätzliche Glättung durchgeführt wurde, einen Wert von 79 GE aufweist.

### Beispiel 2: Erhöhung der Harzmenge

Bei einem Weiß-Dekorpapier wurde die aufgetragene Harzmenge gegenüber der standardgemäßen Harzmenge bezogen auf das Rohpapiergewicht um 30% erhöht. Hierdurch steht beim anschließenden Verpressen auf einer kontinuierlich arbeitenden Presse mehr Harz zur Verfügung, und es bildet sich daher oberhalb der Papierfasern eine überstehende Harzschicht.

Das Dekorpapier mit dem standardgemäßen Harzauftrag erreichte hierbei einen Wert von 28 GE bei der Glanzgradmessung unter einem Einfallswinkel von 20°, und das Dekorpapier, bei dem eine demgegenüber um 30% erhöhte Harzmenge aufgetragen wurde, erreicht einen Wert von 62 GE.

### Beispiel 3: unterschiedliche Harzmengen

Unterschiedliche Dekorpapiere (Weiß-, Elfenbein- und Holzdekor) wurden mit derselben Harzrezeptur, aber unterschiedlichen Harzmengen imprägniert. Hierbei wurde das Elfenbein-Dekorpapier standardgemäß imprägniert, das Holz-Dekorpapier wurde so imprägniert, dass stellenweise bereits überstehend reines Tränkharz erkennbar ist und das Weiß-Dekorpapier wurde so imprägniert, dass vor dem Verpressen durchgehend eine überstehende Tränkharzschicht mit einer mittleren Schichtdicke von wenigstens 5 µm vorhanden ist. Diese imprägnierten Dekorpapiere wurden in einer Kurztaktpresse und in einer kontinuierlich arbeitenden Presse jeweils gegen Hochglanzbleche bzw. Hochglanzbänder verpresst. Die Ergebnisse der Glanzmessung sind wie folgt:

| | ***Kurztakfpresse*** | ***kontinuierlich arbeitende Presse*** |
|---|---|---|
| Elfenbein-Dekorpapier | 26 GE | 22 GE |
| (standardgemäß) | | |
| Holz-Dekorpapier | 58 GE | 48 GE |
| (leicht erhöhter Harzauftrag) | | |
| Weiß-Dekorpapier | 84 GE | 74 GE |
| (durchgehende Tränkharzschicht) | | |

Wie in den obigen Beispielen gezeigt ist, können also hochglänzende Oberflächen 16 bei Dekorpapieren 10 zur Beschichtung von Werkstoffplatten 20 entweder dadurch erreicht werden, dass vor dem Imprägnieren die Rohpapierglätte des zu imprägnierenden Papiers erhöht wird, oder dadurch, dass die aufgetragene Harzmenge gegenüber den Standardparametem erhöht wird. Beide dieser Maßnahmen bewirken die Bildung einer überstehenden Harzschicht 18 oberhalb der Papierfasern 12 der Sichtpapierlage 10.

## Patentansprüche

1. Mehrschichtplatte (100), umfassend eine Werkstoffplatte (20), welche an ihrer Sichtfläche mit wenigstens einer mit Harz getränkten Papierlage (10) beschichtet ist,
wobei auf der von der Werkstoffplatte (20) abgewandten Seite der wenigstens einen Papierlage (10) bzw. der obersten Papierlage (10) eine Harzschicht (18) vorhanden ist, deren mittlere Schichtdicke (d) wenigstens 5 µm beträgt, und
die wenigstens eine Papierlage (10) eine Sichtpapierlage (10), vorzugsweise eine Dekorpapierlage (10), umfasst,
**dadurch gekennzeichnet, dass** die bei der Herstellung der Mehrschichtplatte verwendete Sichtpapierlage (10) eine nach Bekk gemessene Rohpapierglätte von mindestens 20 s, vorzugsweise mindestens 25 s, aufweist.

2. Mehrschichtplatte (100) nach Anspruch 1,
**dadurch gekennzeichnet, dass** die Harzschicht (18) eine im Wesentlichen durchgehend ausgebildete Schicht ist, deren Schichtdicke (d) an jeder Stelle wenigstens 2 µm, vorzugsweise wenigstens 3 µm, beträgt.

3. Mehrschichtplatte (100) nach Anspruch 1 oder 2,
**dadurch gekennzeichnet, dass** die Schichtdicke (d) höchstens 100 µm, vorzugsweise höchstens 50 µm, noch bevorzugter höchstens 20 µm, beträgt.

4. Mehrschichtplatte (100) nach einem der Ansprüche 1 bis 3,
**dadurch gekennzeichnet, dass** zwischen der Werkstoffplatte (20) und der Sichtpapierlage (10) wenigstens eine Unterlegpapierlage (30) angeordnet ist.

5. Mehrschichtplatte (100) nach einem der Ansprüche 1 bis 4,
**dadurch gekennzeichnet, dass** auf der von der Werkstoffplatte (20) abgewandten Seite der Sichtpapierlage (10) eine Overlaypapierlage (40) vorgesehen ist.

6. Mehrschichtplatte (100) nach Anspruch 5,
**dadurch gekennzeichnet, dass** die Overlaypapierlage (40) ein Flächengewicht von zwischen etwa 10 *g*/*m²* und etwa 80 g/m² aufweist.

7. Mehrschichtplatte (100) nach einem der Ansprüche 1 bis 6,
**dadurch gekennzeichnet, dass** die Sichtpapierlage (10) ein Flächengewicht von zwischen etwa 45 g/m² und etwa 140 g/m² aufweist.

8. Mehrschichtplatte (100) nach einem der Ansprüche 1 bis 7,
**dadurch gekennzeichnet, dass** das Harz ein Polykondensat aus Melamin oder/und Harnstoff mit Formaldehyd ist.

9. Mehrschichtplatte (100) nach einem der Ansprüche 1 bis 8,
**dadurch gekennzeichnet, dass** die Werkstoffplatte (20) eine Holzwerkstoffplatte ist, beispielsweise eine Spanplatte oder eine Faserplatte, vorzugsweise eine MDF-Platte oder eine HDF-Platte, oder eine OSB-Platte.

10. Mehrschichtplatte (100) nach einem der Ansprüche 1 bis 8,
**dadurch gekennzeichnet, dass** die Werkstoffplatte (20) eine durch Aufeinanderlegen von mehreren Papierlagen gebildete Schichtpressstoffplatte ist.

## Claims

1. A multilayer board (100), comprising a material board (20) which is coated on its visible surface with at least one paper ply (10) impregnated with resin,
a resin layer (18) being present on the side remote from the material board (20) of the at least one paper ply (10) or the uppermost paper ply (10), the average layer thickness (d) of which resin layer amounts to at least 5 µm, and
the at least one paper ply (10) comprising a visible paper ply (10), preferably a decorative paper ply (10),
**characterised in that** the visible paper ply (10) used in production of the multilayer board has a base paper smoothness of at least 20 s, preferably at least 25 s, measured according to Bekk.

2. A multilayer board (100) according to claim 1, **characterised in that** the resin layer (18) is a substantially continuous layer, whose layer thickness (d) amounts at each point to at least 2 µm, preferably at least 3 µm.

3. A multilayer board (100) according to claim 1 or claim 2,
**characterised in that** the layer thickness (d) amounts to at most 100 µm, preferably at most 50 µm, still more preferably at most 20 µm.

4. A multilayer board (100) according to any one of claims 1 to 3,
**characterised in that** at least one underlay paper ply (30) is arranged between the material board (20) and the visible paper ply (10).

5. A multilayer board (100) according to any one of claims 1 to 4,
**characterised in that** an overlay paper ply (40) is provided on the side of the visible paper ply (10) remote from the material board (20).

6. A multilayer board (100) according to claim 5, **characterised in that** the overlay paper ply (40) has a basis weight of between approx. 10 g/m² and approx. 80 g/m².

7. A multilayer board (100) according to any one of claims 1 to 6,
**characterised in that** the visible paper ply (10) has a basis weight of between approx. 45 g/m² and approx. 140 g/m².

8. A multilayer board (100) according to any one of claims 1 to 7,
**characterised in that** the resin is a polycondensation product of melamine and/or urea with formaldehyde.

9. A multilayer board (100) according to any one of claims 1 to 8,
**characterised in that** the material board (20) is an engineered wood board, for example a particle board or a fibre board, preferably an MDF board or an HDF board, or an OSB board.

10. A multilayer board (100) according to any one of claims 1 to 8,
**characterised in that** the material board (20) is a compressed laminate board formed by superposing a plurality of paper plies.

## Revendications

1. Panneau multicouche (100), comportant un panneau de matériaux (20) dont la surface visible est recouverte d'au moins une couche de papier (10) imprégnée de résine,
une couche de résine (18) dont l'épaisseur moyenne de couche (d) est d'au moins 5 µm étant présente sur le côté, opposé au panneau de matériaux (20), de la au moins une couche de papier (10) ou de la couche de papier (10) supérieure, et
la au moins une couche de papier (10) comportant une couche de papier visible (10), de préférence une couche de papier décoratif (10),
**caractérisé en ce que** la couche de papier visible (10) utilisée lors de la fabrication du panneau multicouche présente un lissé de papier brut mesuré selon la méthode Bekk d'au moins 20 secondes, de préférence d'au moins 25 secondes.

2. Panneau multicouche (100) selon la revendication 1,
**caractérisé en ce que** la couche de résine (18) est une couche réalisée sensiblement en continu, dont l'épaisseur de couche (d) est à chaque endroit d'environ 2 µm, de préférence d'au moins 3 µm.

3. Panneau multicouche (100) selon la revendication 1 ou 2,
**caractérisé en ce que** l'épaisseur de couche (d) est au maximum de 100 µm, de préférence au maximum de 50 µm, de manière encore plus préférentielle au maximum de 20 µm.

4. Panneau multicouche (100) selon l'une quelconque des revendications 1 à 3,
**caractérisé en ce qu'**au moins une couche de papier intercalaire (30) est disposée entre le panneau de matériaux (20) et la couche de papier visible (10).

5. Panneau multicouche (100) selon l'une quelconque des revendications 1 à 4,
**caractérisé en ce qu'**une couche de papier de recouvrement (40) est prévue sur le côté de la couche de papier visible (10), opposé au panneau de matériaux (20).

6. Panneau multicouche (100) selon la revendication 5,
**caractérisé en ce que** la couche de papier de recouvrement (40) présente un grammage compris entre environ 10 g/m² et environ 80 g/m².

7. Panneau multicouche (100) selon l'une quelconque des revendications 1 à 6,
**caractérisé en ce que** la couche de papier visible (10) présente un grammage compris entre environ 45 g/m² et environ 140 g/m².

8. Panneau multicouche (100) selon l'une quelconque des revendications 1 à 7,
**caractérisé en ce que** la résine est un polycondensat de mélamine et/ou d'urée-formaldéhyde.

9. Panneau multicouche (100) selon l'une quelconque des revendications 1 à 8,
**caractérisé en ce que** le panneau de matériaux (20) est un panneau de matériau de bois, par exemple est un panneau de particules ou un panneau de fibres, de préférence un panneau MDF (panneau de fibres de densité moyenne) ou un panneau HDF (panneau de fibres de haute densité) ou un panneau OSB (panneau à particules orientées).

10. Panneau multicouche (100) selon l'une quelconque des revendications 1 à 8,
**caractérisé en ce que** le panneau de matériaux (20) est un panneau stratifié formé par superposition de plusieurs couches de papier.
